# EUROPEAN PATENT APPLICATION

(11) **EP 4 782 415 A1**
(43) Date of publication of application: **29.07.2026**
(21) Application number: 24867993.8
(22) Date of filing: 20.08.2024
(51) Int. Cl.: C04B 20/00, B09B 3/00, C04B 16/02, C04B 16/04, C04B 18/20, C04B 28/02

(54) **LIGHTWEIGHT AGGREGATE, METHOD FOR PRODUCING SAME, AND MORTAR AND CONCRETE USING SAME**

(30) Priority: 21.09.2023 JP 2023156337
(71) Applicant: LIXIL Corporation, Tokyo 141-0033 (JP)
(72) Inventor: ONO, Katsuo, Tokyo 141-0033 (JP)
(74) Representative: Grünecker Patent- und Rechtsanwälte PartG mbB
(86) International application number: PCT/JP2024/029410
(87) International publication number: WO 2025/062912

(57) **Abstract**

A lightweight aggregate according to an embodiment of the present disclosure is a granular body in which protrusions having an average diameter of less than 3.0 mm are scattered on a surface thereof and the arithmetic average roughness Ra of the surface excluding the protrusions falls within the range of 10 µm to 100 µm, and the density of which falls within the range of 0.9 g/cm³ to 1.3 g/cm³.

## Description

### TECHNICAL FIELD

The present disclosure relates to a lightweight aggregate, a method for producing the same, and mortar and concrete including the same.

### BACKGROUND ART

As aggregates for mortar and concrete, lightweight aggregates containing plastic waste have been studied. For example, the use of a composite containing plastic waste and waste other than plastic waste as lightweight aggregates has been studied (see, for example, Patent Document 1 and Patent Document 2).

### Citation List

### Patent Documents

Patent Document 1: Japanese Unexamined Patent Application, Publication No. H11-147739
Patent Document 2: Japanese Unexamined Patent Application, Publication No. 2006-169066

### DISCLOSURE OF THE INVENTION

### Problems to be Solved by the Invention

From the viewpoint of efficient use of resources, lightweight aggregates including plastic waste are preferred. However, resins contained in plastic waste generally have a low affinity for cement and water. Therefore, resin-containing lightweight aggregates are less likely to be uniformly dispersed in mortar or concrete, and thus mortar or concrete containing such lightweight aggregates tends to have reduced mechanical strength and durability. Further, plastic waste may contain aluminum-deposited film. When plastic waste containing aluminum-deposited film is used as lightweight aggregates for mortar or concrete, aluminum of the aluminum-deposited film and cement-derived alkalis may react to generate hydrogen, and the mortar or concrete may expand due to the hydrogen.

It is an object of the present disclosure to provide a lightweight aggregate that contains a resin, especially plastic waste but has a high affinity for cement and water and that is easy to uniformly disperse in mortar or concrete, a method for producing the same, and mortar and concrete including such a lightweight aggregate. Means for Solving the Problems

The present disclosure relates to a lightweight aggregate, which is a granular body having a surface on which protrusions having an average diameter of less than 3.0 mm are scattered. An arithmetic average roughness Ra of the surface excluding the protrusions is 10 µm or more and 100 µm or less, and the lightweight aggregate has a density of 0.9 g/cm³ or more and 1.3 g/cm³ or less.

### BRIEF DESCRIPTION OF THE DRAWINGS

FIG. 1 is a sectional view of a lightweight aggregate according to an embodiment of the present disclosure;
FIG. 2 is an image of surfaces of lightweight fine aggregates obtained in the Examples; and
FIG. 3 is an image of surfaces of lightweight coarse aggregates obtained in the Examples.

### PREFERRED MODE FOR CARRYING OUT THE INVENTION

Hereinbelow, an embodiment of the present disclosure will be described in detail with reference to the drawings.

### [Lightweight aggregate]

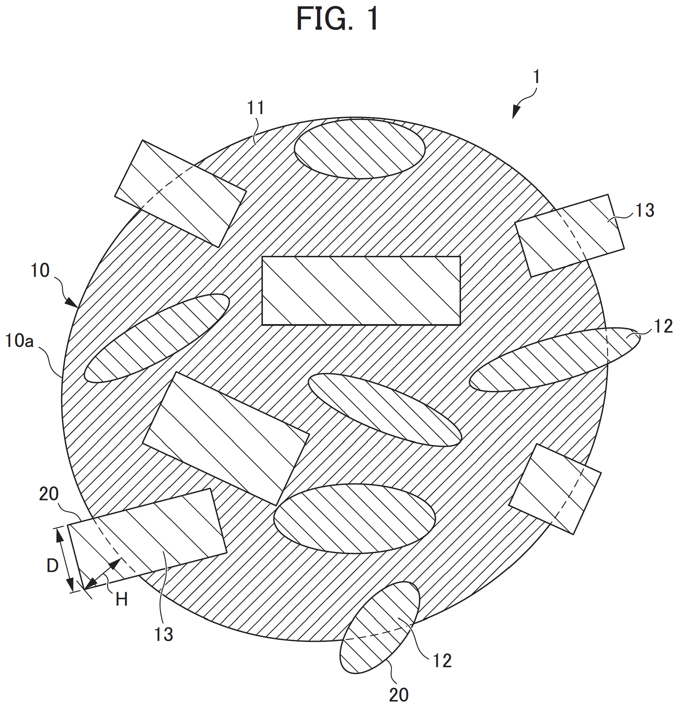

FIG. 1 is a sectional view of a lightweight aggregate according to an embodiment of the present disclosure. As shown in FIG. 1, a lightweight aggregate 1 is a granular body having a granular portion 10 and protrusions 20 scattered on a surface of the granular portion 10. The protrusions 20 have, for example, a diameter (indicated by D in FIG. 1) of 0.05 mm or more and a height (indicated by H in FIG. 1) of 0.2 mm or more. The height H of the protrusion 20 refers to a length from a surface 10a of the granular portion 10. The shape of the granular portion 10 is not limited and may be, for example, spherical, oval, cylindrical, prismatic, conical, pyramidal, or indefinite.

In the lightweight aggregate 1, the arithmetic average roughness Ra of the surface 10a, excluding the protrusions 20, of the granular portion 10 is within the range of 10 µm or more and 100 µm or less. The maximum height roughness Rz of the surface 10a, excluding the protrusions 20, of the granular portion 10 may be in the range of, for example, three times or more and six times or less the arithmetic average roughness Ra. The arithmetic average roughness Ra may be in the range of, for example, 20 µm or more and 70 µm or less. The maximum height roughness Rz may be in the range of, for example, 60 µm or more and 400 µm or less or 60 µm or more and 180 µm or less. The arithmetic average roughness Ra or the maximum height roughness Rz is, for example, an average of values of arithmetic average roughness Ra or maximum height roughness Rz obtained by measuring arithmetic average roughness Ra or maximum height roughness Rz at three points on the surface 10a of the granular portion 10 of each of 10 lightweight aggregates 1 as measurement samples. The arithmetic average roughness Ra and the maximum height roughness Rz can be measured using, for example, a shape-measuring laser microscope.

The average of diameters D (average diameter) of the protrusions 20 of the lightweight aggregate 1 is less than 3.0 mm. The average diameter of the protrusions 20 may be in the range of, for example, 0.1 mm or more and less than 2.0 mm. The average of heights H (average height) of the protrusions 20 of the lightweight aggregate 1 may be in the range of, for example, 0.4 mm or more and 2.0 mm or less. The average diameter or the average height of the protrusions 20 is, for example, an average of values obtained by measuring diameters or heights of the protrusions 20 of each of 10 lightweight aggregates 1 as measurement samples. The diameters and heights of the protrusions 20 can be measured using, for example, a shape-measuring laser microscope.

The number of the protrusions 20 of the lightweight aggregate 1 is not limited, but the average number of the protrusions 20 per one lightweight aggregate 1 may be within the range of, for example, 5 or more and 100 or less or the range of 10 or more and 50 or less.

The lightweight aggregate 1 has a density within the range of 0.9 g/cm³ or more and 1.3 g/cm³ or less. The lightweight aggregate 1 may have a water absorption within the range of, for example, 5% by mass or more and 20% by mass or less. The density and water absorption of the lightweight aggregate 1 are, for example, values measured in accordance with JIS A 1109:2020 (Methods of test for density and water absorption of fine aggregates) or JIS A 1110:2020 (Method of test for density and water absorption of coarse aggregates). The lightweight aggregate 1 may have a bulk density (in absolute dry condition) within the range of 0.2 kg/L or more and 0.8 kg/L or less. The bulk density is, for example, a value measured in accordance with JIS A 1104:2019 (Methods of test for bulk density of aggregates and solid content in aggregates).

The particle diameter of the lightweight aggregate 1 is not limited and can be adjusted depending on its intended use. For example, when the lightweight aggregate 1 is used as a fine aggregate, a 2.5-mm sieve residue as measured using a sieve having an aperture size of 2.5 mm may be 95% by mass or more, and a 5.0-mm sieve residue as measured using a sieve having an aperture size of 5.0 mm may be less than 15% by mass. When the lightweight aggregate 1 is used as a coarse aggregate, a 5.0-mm sieve residue as measured using a sieve having an aperture size of 5.0 mm may be 85% by mass or more. When the lightweight aggregate 1 is used as a coarse aggregate, a 25-mm sieve residue as measured using a sieve having an aperture size of 25 mm may be 5% by mass or less.

The lightweight aggregate 1 contains a low-melting-point resin 11 and non-low-melting-point resin particles 12 and wood particles 13 dispersed in the low-melting-point resin. The low-melting-point resin 11 is bonded to the non-low-melting-point resin particles 12 and the wood particles 13 to form the granular portion 10. Some of the non-low-melting-point resin particles 12 and the wood particles 13 protrude through the surface 10a of the granular portion 10 to form the protrusions 20. The low-melting-point resin 11 allows the surface 10a of the granular portion 10 to have irregularities.

The low-melting-point resin 11 is a thermoplastic resin having a melting point within the range of, for example, 80°C or more and less than 190°C. Examples of the low-melting-point resin 11 include polystyrene (PS), acrylonitrile-butadiene-styrene resin (ABS), polyethylene (PE), polymethyl methacrylate (PMMA), polycarbonate (PC), polypropylene (PP), polyamide 12 (PA12), and polyacetal (POM). The non-low-melting-point resin particles 12 contain, for example, at least one selected from a high-melting-point resin having a melting point of 190°C or more and a thermosetting resin. The melting point of the high-melting-point resin may be 340°C or less. Examples of the high-melting-point resin include polyethylene terephthalate (PET), polyamide 6 (PA6), polybutylene terephthalate (PBT), polyphenylene sulfide (PPS), and polyether ether ketone (PEEK)
The thermosetting resin is a resin after curing. Examples of the thermosetting resin include polyimide (PI), polyurethane (PU), and phenol resin (PF). The non-low-melting-point resin particles 12 may have an average major axis within the range of, for example, less than 3.0 mm, or 0.5 mm or more and less than 2.0 mm.

The low-melting-point resin 11 and the non-low-melting-point resin particles 12 may be derived from plastic waste.

The wood particles 13 may have an average major axis within the range of, for example, less than 3.0 mm or 0.5 mm or more and less than 2.0 mm. The wood particles 13 may be, for example, a ground product of waste wood. The waste wood may be, for example, construction waste wood, thinned wood, or sawdust.

The content of the low-melting-point resin 11 in the lightweight aggregate 1 may be within the range of, for example, 10% by mass or more and 80% by mass or less or the range of 10% by mass or more and 50% by mass or less. The content of the non-low-melting-point resin particles 12 in the lightweight aggregate 1 may be within the range of, for example, 10% by mass or more and 80% by mass or less or the range of 15% by mass or more and 75% by mass or less. The content of the wood particles 13 in the lightweight aggregate 1 may be within the range of, for example, 10% by mass or more and 50% by mass or less, or the range of 20% by mass or more and 40% by mass or less. The mass ratio of the content of the wood particles 13 to the total content of the low-melting-point resin 11 and the non-low-melting-point resin particles 12 (total content of low-melting-point resin 11 and non-low-melting-point resin particles 12/content of wood particles 13) may be, for example, 3.0 or less or 2.5 or less.

The lightweight aggregate 1 may further contain an additive such as a pigment, a compatibilizing agent to improve affinity among the low-melting-point resin 11, the non-low-melting-point resin particles 12, and the wood particles 13, a filler, a lubricant, a weathering agent, a heat stabilizer, a foaming agent, or an antistatic agent.

Since the lightweight aggregate 1 according to the present embodiment having such a configuration as described above has protrusions 20 having an average diameter within the above range scattered thereon, and the arithmetic average roughness Ra of the surface 10a, excluding the protrusions 20, of the granular portion 10 and the density are within the above range, the lightweight aggregates 1 are less likely to clump together and the area of contact with cement and water is large. Therefore, the lightweight aggregates 1 according to the present embodiment can be uniformly dispersed in mortar or concrete in spite of the fact that they contain resins. In addition, since the area of contact between the lightweight aggregates 1 and cement is large, mortar or concrete including the lightweight aggregates 1 has improved mechanical strength. Further, the density within the above range is lower than the density of sand or gravel used as aggregates for mortar or concrete. Therefore, the lightweight aggregates 1 according to the present embodiment can be advantageously used as aggregates for mortar or concrete.

In the present embodiment, when the lightweight aggregate 1 contains the non-low-melting-point resin particles 12 and the wood particles 13 dispersed in the low-melting-point resin 11, the melting point of the low-melting-point resin 11 is within the above range, the non-low-melting-point resin particles 12 contain at least one selected from the above-described high-melting-point resin and the above-described thermosetting resin, the granular portion 10 is formed of the low-melting-point resin 11, and the protrusions 20 are formed from the non-low-melting-point resin particles 12 and/or the wood particles 13, the density is low, and therefore the lightweight aggregates 1 can be uniformly dispersed in mortar or concrete more reliably. Particularly, the wood particles 13 have a high affinity for water, and therefore the lightweight aggregates 1 containing the wood particles 13 are easy to more uniformly disperse in mortar or concrete. Further, the wood particles 13 have a high affinity for cement, and therefore even when mortar or concrete including the lightweight aggregates 1 containing the wood particles 13 is broken, cleavages or cracks are less likely to extend. Further, when the low-melting-point resin 11 and the non-low-melting-point resin particles 12 are derived from plastic waste, resources can be efficiently used. Plastic waste may contain aluminum-deposited film. Aluminum-deposited film is generally obtained by depositing aluminum onto low-melting-point resin film, and therefore in the lightweight aggregate 1 according to the present embodiment, aluminum of the aluminum-deposited film is dispersed in an oxidized state in the low-melting-point resin 11 of the granular portion 10. Therefore, when the lightweight aggregates 1 according to the present embodiment are used as lightweight aggregates for mortar or concrete, hydrogen is less likely to be generated.

When the average number of the protrusions 20 per one lightweight aggregate 1 according to the present embodiment is within the above range, the lightweight aggregates 1 are much less likely to clump together and are therefore easy to more uniformly disperse in mortar or concrete. Further, when the protrusions 20 have a height within the above range, the lightweight aggregates 1 are far less likely to clump together and are therefore easy to much more uniformly disperse in mortar or concrete.

In the present embodiment, the lightweight aggregate 1 in which a sieve residue as measured using a sieve having an aperture size of 2.5 mm is 95% by mass or more and a sieve residue as measured using a sieve having an aperture size of 5.0 mm is less than 15% by mass can be used as a fine aggregate for mortar or concrete. The lightweight aggregate 1 in which a sieve residue as measured using a sieve having an aperture size of 5.0 mm is 85% by mass or more can be used as a coarse aggregate for concrete.

### [Method for producing lightweight aggregate]

The lightweight aggregate 1 according to the present embodiment can be produced by, for example, a method including a forming step of extruding a mixture containing the low-melting-point resin 11, the non-low-melting-point resin particles 12, and the wood particles 13 to form a formed body, a grinding step of grinding the obtained formed body to obtain a ground product, and a classification step of subjecting the obtained ground product to classification. Hereinbelow, the method for producing the lightweight aggregate will be described with reference to a case where plastic waste is used as a material of the low-melting-point resin and the non-low-melting-point resin particles, and waste wood is used as a material of the wood particles.

As the plastic waste, plastic wastes derived from domestic waste, industrial waste, and marine plastic waste can be used. The domestic waste refers to other waste excluding industrial waste and marine plastic waste and includes household waste discharged from general households. The plastic waste may contain materials other than synthetic resins. The materials other than synthetic resins may either be inorganic materials or organic materials. Examples of the inorganic materials include magnetic substances, non-magnetic metals, glass, small stones, metals, shells, sand, desiccants such as silica gel, and iron-based deoxidizers. Examples of the magnetic substances include iron, stainless steel, ferrite, cobalt, and nickel. Examples of the non-magnetic metals include aluminum, copper, zinc, and brass. Examples of the organic materials include fats and oils, food residues, and surfactants.

Examples of the plastic waste derived from domestic waste include plastics that have been used as containers or packing materials for products. The plastic waste derived from industrial waste refers to plastic waste generated by business activities. Examples of the plastic waste derived from industrial waste include irregular products and surplus products. The plastic waste derived from marine plastic waste refers to plastic waste accumulated in the oceans due to direct disposal of plastics in the sea and drift of plastics discharged on land into the sea through rivers or lakes. The plastic waste derived from marine plastic waste includes, for example, microplastics measuring 5 mm or less which are generated by degradation of plastics (plastic pieces, plastic bottles, fishing equipment) and plastic products discharged into the oceans due to the effect of waves or ultraviolet light.

The content of the low-melting-point resin in the synthetic resins contained in the plastic waste may be within the range of, for example, 25% by mass or more and 95% by mass or less, or the range of 35% by mass or more and 90% by mass or less. The total content of PP and PE in the low-melting-point resin in the plastic-containing waste may be 90% by mass or less or within the range of 20% by mass or more and 80% by mass or less. The content of the non-low-melting-point resin in the synthetic resins contained in the plastic waste may be within the range of, for example, 5% by mass or more and 75% by mass or less or the range of 10% by mass or more and 65% by mass or less. The content ratio by mass of the low-melting-point resin to the non-low-melting-point resin (low-melting-point resin/non-low-melting-point resin) in the low-melting-point resin may be within the range of, for example, 1/3 or more and 5.00 or less or the range of 0.71 or more and 3.00 or less. The content ratio by mass of the thermosetting resin to the high-melting-point resin (thermosetting resin/high-melting-point resin) in the non-low-melting-point resin in the plastic-containing waste may be within the range of, for example, 0.01 or more and 100 or less or the range of 0.05 or more and 50 or less.

The low-melting-point resin and the non-low-melting-point resin particles can be recovered from the plastic waste by, for example, a method including a crushing step, a magnetic-substance removal step, a non-magnetic-metal removal step, a water-washing step, a volume reduction step, and a grinding step. The crushing step is a step of crushing the plastic waste using a crushing machine to obtain plastic pieces. The crushing machine may be, for example, a single-shaft grinding machine. The magnetic-substance removal step is a step of removing and recovering magnetic substances contained in the plastic pieces using a magnetic separator. The magnetic separator may be, for example, a suspended magnetic separator, a pulley-type magnetic separator, a drum-type magnetic separator, or a roller-type magnetic separator. The non-magnetic-metal removal step is a step of removing and recovering non-magnetic metals contained in the plastic pieces using a non-magnetic metal separator. The non-magnetic metal separator may be an eddy current separator. The water-washing step is a step of grinding the plastic pieces into coarse plastic particles and simultaneously washing and removing adhering materials on the coarse plastic particles using a wet-grinding and washing machine having a grinding function. The adhering materials include organic materials such as fats and oils, food residues, and surfactants and inorganic materials such as glass, small stones, metals, shells, sand, desiccants, and deoxidizers. The volume reduction step is a step of removing moisture attached to the coarse plastic particles and reducing the volume of the coarse plastic particles using a compression volume-reduction machine. The compression volume-reduction machine may be a screw-type compression volume-reduction machine in which a screw is provided in a barrel having a drain hole. The grinding step is a step of grinding the coarse plastic particles using a grinding machine to obtain resin composition particles. The grinding machine may be a fine grinding machine (cutter mill) that has a stationary blade and a rotary blade to grind plastic pieces between the stationary blade and the rotary blade. The coarse plastic particles are ground to pass through a sieve having a predetermined aperture size. The aperture size of the sieve may be, for example, 3.0 mm. In this way, resin composition particles can be obtained which include low-melting-point resin particles and non-low-melting-point resin particles having a predetermined average major axis.

The wood particles can be recovered from waste wood by, for example, a method including a crushing step, a magnetic-substance removal step, and a grinding step. The crushing step is a step of crushing waste wood using a crushing machine to obtain wood chips. The crushing machine may be, for example, a single-shaft grinding machine. The magnetic-substance removal step is a step of removing and recovering magnetic substances contained in the wood chips using a magnetic separator. The magnetic separator may be one described above. The grinding step is a step of grinding the wood chips using a grinding machine to obtain wood particles. The grinding machine may be a cutter mill. The grinding may be performed at the same time with grinding of the coarse plastic particles described above using the same apparatus as used for the coarse plastic particles.

In the forming step, the thus obtained resin composition particles and wood particles are mixed in the ratio described above to obtain a mixture. Then, the obtained mixture is extruded to form a formed body. The extrusion makes it possible to melt the low-melting-point resin particles, thereby obtaining a formed body in which the non-low-melting-point resin particles and the wood particles are dispersed in the low-melting-point resin. The shape of the formed body is not limited and may be, for example, a plate shape. The forming temperature of the formed body is, for example, a temperature equal to or more than the melting point of the low-melting-point resin particles and equal to or less than the melting point of the non-low-melting-point resin particles. The forming temperature of the formed body varies depending on a factor such as the type or content of the low-melting-point resin contained in the raw material mixture, and when the raw material mixture contains, for example, PE, the forming temperature is 150°C or more. On the other hand, the forming temperature is preferably less than 190°C because there is a case where the wood particles are decomposed and gasified at 190°C or more so that the resin composition formed body has gas bubbles.

In the grinding step, the obtained formed body is ground using a grinding apparatus to obtain a ground product. The grinding apparatus for the formed body may be, for example, a single-shaft crushing machine. The formed body is ground to pass through a sieve having a predetermined aperture size. The aperture size of the sieve may be, for example, 15.0 mm. When the formed body is ground, the grinding occurs at positions where the wood particles and the non-low-melting-point resin particles are present in the formed body. Therefore, the wood particles and the non-low-melting-point resin particles are protruded through the surface to form protrusions. Further, the surface of the low-melting-point resin present between the wood particles, between the non-low-melting-point resin particles, and between the wood particles and the non-low-melting-point resin particles has irregularities formed to have an arithmetic average roughness Ra within the range of 10 µm or more and 100 µm or less.

In the classification step, the obtained ground product is subjected to classification using a classification apparatus. The classification apparatus may be, for example, a vibrating sieve.

The method for producing the lightweight aggregate 1 according to the present embodiment having such a configuration as described above makes it possible to industrially advantageously produce the lightweight aggregate 1 having a surface on which protrusions 20 having an average diameter of less than 3.0 mm are scattered, wherein the arithmetic average roughness Ra of the surface 10a, excluding the protrusions 20, of the granular portion 10 is within the range of 10 µm or more and 100 µm or less and the density is within the range of 0.9 g/cm³ or more and 1.3 g/cm³ or less. When the plastic waste contains aluminum-deposited film, aluminum of the aluminum-deposited film is oxidized by heating and dispersed in the melted low-melting-point resin in the forming step. Therefore, when the lightweight aggregates 1 obtained by the production method according to the present embodiment are used as lightweight aggregates for mortar or concrete, hydrogen is less likely to be generated.

### [Mortar]

Mortar according to the present embodiment contains cement and the lightweight aggregates 1 described above. The content of the lightweight aggregates 1 in the mortar is within the range of, for example, 10% by mass or more and 30% by mass or less. The mortar according to the present embodiment can be used as, for example, an exterior wall material, an interior wall material, a foundation for tiles, or a joint sealer for bricks or building blocks.

The mortar according to the present embodiment can be produced by, for example, a method in which cement, the lightweight aggregates 1, and water are mixed to prepare fresh mortar and the obtained fresh mortar is applied and dried.

The mortar according to the present embodiment having such a configuration as describe above contains the lightweight aggregates 1 and is therefore likely to exhibit strength due to uniform dispersion of the lightweight aggregates 1.

### [Concrete]

Concrete according to the present embodiment contains cement, fine aggregates, and coarse aggregates. As the fine aggregates and/or the coarse aggregates, the lightweight aggregates 1 are used. The content of the lightweight aggregates in the concrete is within the range of, for example, 10% by mass or more and 30% by mass or less. The concrete according to the present embodiment can be used as, for example, a material for various civil engineering works such as foundation works and exterior works or a pavement material.

The concrete according to the present embodiment can be produced by, for example, a method including a fresh concrete preparation step, a fresh concrete placing step, and a form stripping step. The fresh concrete preparation step is a step of mixing cement, fine aggregates, coarse aggregates, and water to prepare fresh concrete. The fresh concrete placing step is a step of placing the obtained fresh concrete into forms for molding concrete. The form stripping step is a step of stripping forms from concrete produced by hardening of the fresh concrete.

The concrete according to the present embodiment having such a configuration as described above contains the lightweight aggregates 1 and is therefore likely to exhibit strength due to uniform dispersion of the lightweight aggregates 1.

Although the embodiment of the present disclosure has been described above, the present disclosure is not limited thereto and can be appropriately changed. The lightweight aggregate 1 according to the present embodiment is configured to contain the low-melting-point resin 11 and the non-low-melting-point resin particles 12 and the wood particles 13 dispersed in the low-melting-point resin 11, but the present disclosure is not limited thereto. For example, ceramic particles may be used instead of or in addition to the wood particles 13. Further, the lightweight aggregate 1 according to the present embodiment contains the low-melting-point resin 11 and the non-low-melting-point resin particles 12 derived from plastic waste, but the present disclosure is not limited thereto. For example, resin products may be used as the low-melting-point resin 11 and the non-low-melting-point resin particles 12. Further, in the method for producing the lightweight aggregate 1 according to the present embodiment, the low-melting-point resin is ground into particles, but the low-melting-point resin does not necessarily have to be in the form of particles as long as it can be melted during extrusion.

### EXAMPLES

Hereinbelow, the present disclosure will be described in more detail on the basis of examples. The present disclosure is not limited by these examples.

### [Example 1: Production and evaluation of lightweight fine aggregates and lightweight coarse aggregates]

Plastic waste derived from domestic waste containing low-melting-point resins (PE, PP, PS) and non-low-melting-point resins (PA6, PET) was fed into a disintegration machine and disintegrated. From the thus obtained disintegrated product, magnetic substances were removed by a high-magnetic pulley-type magnetic separator with a magnetic force of 20000 gauss at its belt surface. Then, the disintegrated product, from which magnetic substances had been removed, was crushed by a single-shaft coarse grinding machine to pass through a sieve having an aperture size of 50 mm, thereby obtaining plastic waste pieces. Magnetic substances contained in the obtained plastic waste pieces were removed and recovered using a suspended magnetic separator and a pulley-type magnetic separator. Then, non-magnetic metals contained in the plastic waste pieces were removed and recovered using a non-magnetic metal separator. Then, the plastic waste pieces were ground and washed using a wet-grinding and washing machine to pass through a sieve having an aperture size of 12 mm, thereby obtaining plastic waste coarse particles. Then, the plastic waste coarse particles washed in the wet-grinding and washing machine were subjected to compression dehydration using a volume-reduction compression dehydrator to reduce their volume. Then, the plastic waste coarse particles subjected to volume reduction were ground using a cutter-mill-type grinding machine to pass through a sieve having an aperture size of 1 mm. In this way, plastic waste particles were obtained. The obtained plastic waste particles had a low-melting-point resin content of 49% by mass and a non-low-melting-point resin content of 50% by mass.

Waste wood was crushed by a crushing machine to pass through a sieve having an aperture size of 50 mm, thereby obtaining waste wood chips. Magnetic substances contained in the obtained waste wood chips were removed and recovered using a suspended magnetic separator and a pulley-type magnetic separator. Then, the waste wood chips were ground using a cutter-mill-type grinding machine to pass through a sieve having an aperture size of 1 mm. In this way, waste wood particles were obtained.

The plastic waste particles, the waste wood particles, and an additive (a mixture containing a pigment, a compatibilizing agent, an inorganic filler, a lubricant, and a weathering agent) were mixed in a mass ratio of 62:35:3 to obtain a mixture. The obtained mixture was formed using an extruder to obtain a plate-shaped formed body. The obtained formed body was ground using a single-shaft crushing machine to pass through a sieve having an aperture size of 15 mm, thereby obtaining a ground product.

The obtained ground product was subjected to classification using a sieve having an aperture size of 2.5 mm and a sieve having an aperture size of 5.0 mm. The ground product remaining on a sieve having an aperture size of 2.5 mm was used as lightweight fine aggregates, and the ground product remaining on a sieve having an aperture size of 5.0 mm was used as lightweight coarse aggregates.

The obtained lightweight coarse aggregates were subjected to measurement of mass fractions (passage rates) of the ground product passing through sieves having aperture sizes of 2.5 mm, 5.0 mm, 10 mm, 15 mm, 20 mm, and 25 mm in accordance with JIS A 1102:2014 (Method of test for sieve analysis of aggregates). The results are shown below in Table 1.

**[Table 1]**

| Opening size of sieve (mm) | Passage rate of ground product (mass%) |
|---|---|
| 25 | 100 |
| 20 | 100 |
| 15 | 96 |
| 10 | 43 |
| 5.0 | 7.5 |
| 2.5 | 0 |

The obtained lightweight fine aggregates and lightweight coarse aggregates were subjected to surface observation and measurements of surface roughness, density, water absorption, and bulk density in absolute dry condition by the following methods. The measurement results of surface roughness, density, water absorption, and bulk density (in absolute dry condition) are shown below in Table 2.

### (Surface observation)

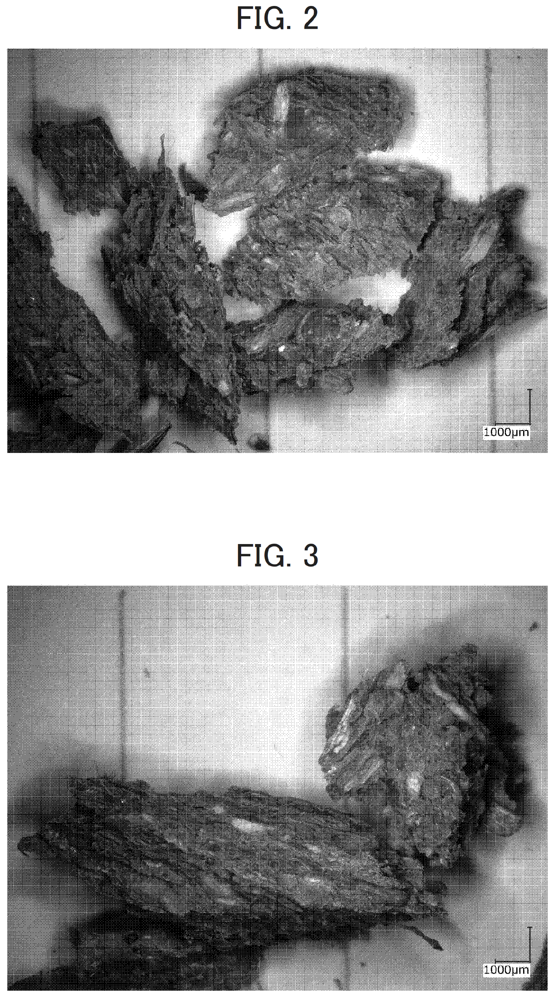

The surface observation was performed using a digital microscope (VHX-900F manufactured by KEYENCE CORPORATION). The image of surfaces of the lightweight fine aggregates is shown in FIG. 2, and the image of surfaces of the lightweight coarse aggregates is shown in FIG. 3. The observation images shown in FIG. 2 and FIG. 3 confirmed that in each of the lightweight fine aggregates and the lightweight coarse aggregates, the non-low-melting-point resin particles and the wood particles were exposed on the surface, and some of the wood particles were scattered as protrusions.

### (Surface roughness)

Three areas (size: 500 × 725 µm) with no protrusion were selected in each of 10 lightweight fine aggregates or 10 lightweight coarse aggregates, and arithmetic average roughness Ra and maximum height roughness Rz were measured on a straight line set in each of the areas using a shape-measuring laser microscope (VK-X100 manufactured by KEYENCE CORPORATION). An average of the obtained values of arithmetic average roughness Ra and an average of the obtained values of maximum height roughness Rz were calculated.

### (Density, Water absorption)

The density and water absorption of the lightweight fine aggregates were measured in accordance with JIS A 1109:2020 (Methods of test for density and water absorption of fine aggregates). The density and water absorption of the lightweight fine aggregates were measured in accordance with JIS A 1110:2020 (Method of test for density and water absorption of coarse aggregates).

### (Bulk density)

The bulk density was measured in accordance with JIS A 1104:2019 (Methods of test for bulk density of aggregates and solid content in aggregates).

**[Table 2]**

| | Arithmetic average roughness Ra (µm) | Maximum height roughness Rz (µm) | Density (g/cm³) | Water absorption (mass%) | Bulk density (kg/L) |
|---|---|---|---|---|---|
| Lightweight fine aggregates | 25 | 103 | 0.96 | 15.5 | 0.34 |
| Lightweight coarse aggregates | 32 | 152 | 1.05 | 9.6 | 0.48 |

### [Example 2, Comparative Example 1, Reference Example 1: Preparation and evaluation of fresh mortar]

Materials shown below in Table 3 were prepared. Plastic waste particles were prepared in the same manner as in Example 1 except that the plastic waste coarse particles subjected to volume reduction were ground using a cutter-mill-type grinding machine to pass through a sieve having an aperture size of 5 mm.

**[Table 3]**

| Material | Type | Symbol | Density (g/cm³) | Bulk density (kg/L) |
|---|---|---|---|---|
| Cement | Ordinary Portland cement | C | 3.16 | - |
| Lightweight fine aggregates | Lightweight fine aggregates produced in Example 1 | RS | 0.96 | 0.34 |
| Plastic waste particles | Ground product of plastic waste | PS | 0.95 | 0.32 |
| Sand | Sea sand (collected in Kumatori Town, Sennan District, Osaka) | S | 2.50 | 1.23 |
| Water | - | W | - | - |

The materials shown above were mixed in mixing ratios shown below in Table 4 using a mortar mixer to prepare fresh mortars.

Test pieces were prepared using the obtained fresh mortars in accordance with JIS R 5201:2015 (Physical testing methods for cement), and the bulk density and flexural strength of the obtained test pieces were measured. The bulk density of the test piece was calculated by dividing the weight by the volume of the test piece. The volume of the test piece was calculated from its dimensions actually measured. Further, the ratio of the flexural strength to the bulk density (flexural strength/bulk density) was calculated as specific strength. The results are shown below in Table 4.

**[Table 4]**

| | Type of aggregates | Material formulation | | | Evaluation | | |
|---|---|---|---|---|---|---|---|
| | | Cement (kg) | Aggregates (kg) | Water (kg) | Bulk density (ton/m³) | Flexural strength (MPa) | Specific strength |
| Example 2 | RS | 2.5 | 1.9 | 1.5 | 1.44 | 2.23 | 1.55 |
| Comparative Example 1 | PS | 2.5 | 1.9 | 1.9 | 0.91 (expanded during curing) | 0.61 | 0.67 |
| Reference Example 1 | S | 2.5 | 7.5 | 1.3 | 2.08 | 3.49 | 1.68 |

The specific strength of the test piece obtained from the fresh mortar of Example 2 including the lightweight fine aggregates obtained in Example 1 was 1.55 and was therefore comparable to the specific strength of the test piece obtained from the fresh mortar of Reference Example 1 including conventional sand. This result confirmed that the use of the lightweight fine aggregates obtained in Example 1 developed the strength of mortar. The test piece obtained from the fresh mortar of Comparative Example 1 including the plastic waste particles expanded during curing. The reason for this is that aluminum of aluminum-deposited film contained in the plastic waste particles reacted with alkalis derived from the cement to generate hydrogen gas.

### [Examples 3 to 5, Reference Example 2: Preparation and evaluation of fresh concrete]

Materials shown below in Table 5 were prepared.

**[Table 5]**

| Material | Type | Symbol | Density (g/cm³) | Bulk density (kg/L) |
|---|---|---|---|---|
| Cement | Ordinary Portland cement | C | 3.16 | - |
| Sand | Sea sand (collected in Kumatori Town, Sennan District, Osaka) | S | 2.50 | 1.23 |
| Lightweight coarse aggregates | Lightweight coarse aggregates produced in Example 1 | RG | 1.05 | 0.48 |
| Artificial lightweight fine aggregates | MESALITE fine aggregates (manufactured by Nihon Mesalite Industry Co., Ltd.) | MS | 1.62 | 0.96 |
| Artificial lightweight coarse aggregates | MESALITE coarse aggregates (manufactured by Nihon Mesalite Industry Co., Ltd.) | MG | 1.30 | 0.79 |
| Gravel | Crushed hard sandstone (produced in Ehime Prefecture) | G | 2.50 | 1.67 |
| Water | - | W | - | - |

The materials shown above were mixed in mixing ratios shown below in Table 6 using a mortar mixer to prepare fresh concretes. It should be noted that in Examples 3 to 5, the ratio of water/cement (W/C ratio) was adjusted in such a manner that the slump value of the fresh concrete fell within the range of 5 to 15 cm.

Test pieces were prepared using the obtained fresh concretes in accordance with JIS A 1106:2018 (Method of test for flexural strength of concrete), and the bulk density and flexural strength of the obtained test pieces were measured. The results are shown below in Table 6.

**[Table 6]**

| | Type of aggregates | | Material formulation | | | | | Evaluation | |
|---|---|---|---|---|---|---|---|---|---|
| | Fine aggregates | Coarse aggregates | Cement (kg) | Fine aggregates (kg) | Coarse aggregates (kg) | Water (kg) | Water/Cement ratio (mass%) | Bulk density (ton/m³) | Flexural strength (MPa) |
| Example 3 | S | RG | 3.0 | 8.1 | 2.4 | 2.2 | 73 | 1.77 | 2.19 |
| Example 4 | S | RG | 3.5 | 7.4 | 2.2 | 2.0 | 57 | 1.82 | 3.01 |
| Example 5 | S | RG | 4.0 | 10.0 | 2.0 | 1.8 | 45 | 1.87 | 4.28 |
| Reference Example 2 | MS | MG | 3.0 | 6.6 | 6.3 | 1.7 | 56 | 1.87 | 4.25 |

The results shown in Table 6 reveal that the use of the lightweight coarse aggregates obtained in the present Example can significantly reduce the bulk density of concrete. The results shown in Table 6 also reveal that concrete having bulk density and flexural strength comparable to those of the fresh concrete obtained in Reference Example 2 including conventional lightweight fine aggregates and lightweight coarse aggregates can be obtained by adjusting the amount of the lightweight coarse aggregates to be added.

Hereinbelow, aspects of the present disclosure will be described in the following additional remarks.

### (Additional Remark 1)

A lightweight aggregate, which is a granular body having a surface on which protrusions having an average diameter of less than 3.0 mm are scattered, wherein an arithmetic average roughness Ra of the surface excluding the protrusions is 10 µm or more and 100 µm or less, and the lightweight aggregate has a density of 0.9 g/cm³ or more and 1.3 g/cm³ or less.

### (Additional Remark 2)

The lightweight aggregate according to Additional Remark 1, including a low-melting-point resin, and non-low-melting-point resin particles and wood particles dispersed in the low-melting-point resin, wherein the low-melting-point resin has a melting point of 80°C or more and less than 190°C, the non-low-melting-point resin particles contain at least one selected from a high-melting-point resin having a melting point of 190°C or more and a thermosetting resin, and the protrusions are formed from the non-low-melting-point resin particles and/or the wood particles.

### (Additional Remark 3)

The lightweight aggregate according to Additional Remark 1 or 2, wherein an average number of the protrusions per one lightweight aggregate is 5 or more and 100 or less.

### (Additional Remark 4)

The lightweight aggregate according to any one of Additional Remarks 1 to 3, wherein the protrusions have an average height of 0.4 mm or more and 2.0 mm or less.

### (Additional Remark 5)

The lightweight aggregate according to any one of Additional Remarks 1 to 4, wherein a sieve residue as measured using a sieve having an aperture size of 2.5 mm is 95% by mass or more and a sieve residue as measured using a sieve having an aperture size of 5.0 mm is less than 15% by mass.

### (Additional Remark 6)

The lightweight aggregate according to any one of Additional Remarks 1 to 5, wherein a sieve residue as measured using a sieve having an aperture size of 5.0 mm is 85% by mass or more.

### (Additional Remark 7)

A lightweight aggregate, which is a granular body having a surface on which protrusions having an average diameter of less than 3.0 mm are scattered, including a low-melting-point resin, and non-low-melting-point resin particles and wood particles dispersed in the low-melting-point resin, wherein the low-melting-point resin has a melting point of 80°C or more and less than 190°C, the non-low-melting-point resin particles contain at least one selected from a high-melting-point resin having a melting point of 190°C or more and a thermosetting resin, and the protrusions are formed from the non-low-melting-point resin particles and/or the wood particles.

### (Additional Remark 8)

The lightweight aggregate according to Additional Remark 7, wherein the low-melting-point resin and the non-low-melting-point resin particles are derived from plastic waste.

### (Additional Remark 9)

A method for producing a lightweight aggregate, including: extruding a mixture including a low-melting-point resin having a melting point of 80°C or more and less than 190°C, non-low-melting-point resin particles containing at least one selected from a high-melting-point resin having a melting point of 190°C or more and a thermosetting resin and having an average major axis of less than 3.0 mm, and wood particles having an average major axis of less than 3.0 mm to form a formed body; grinding the formed body to obtain a ground product; and subjecting the ground product to classification.

### (Additional Remark 10)

Mortar containing cement and the lightweight aggregate according to any one of Additional Remarks 1 to 8.

### (Additional Remark 11)

Concrete containing cement and the lightweight aggregate according to any one of Additional Remarks 1 to 8.

### EXPLANATION OF REFERENCE NUMERALS

1···Lightweight aggregate, 10···Granular portion, 10a···Surface, 11···Low-melting-point resin, 12···Non-low-melting-point resin particle, 13···Wood particle, 20···Protrusion

## Claims

1. A lightweight aggregate, which is a granular body having a surface on which protrusions having an average diameter of less than 3.0 mm are scattered, wherein
an arithmetic average roughness Ra of the surface excluding the protrusions is 10 µm or more and 100 µm or less, and
the lightweight aggregate has a density of 0.9 g/cm³ or more and 1.3 g/cm³ or less.

2. The lightweight aggregate according to claim 1, comprising a low-melting-point resin, and non-low-melting-point resin particles and wood particles dispersed in the low-melting-point resin, wherein
the low-melting-point resin has a melting point of 80°C or more and less than 190°C,
the non-low-melting-point resin particles contain at least one selected from a high-melting-point resin having a melting point of 190°C or more and a thermosetting resin, and
the protrusions are formed from the non-low-melting-point resin particles and/or the wood particles.

3. The lightweight aggregate according to claim 1 or 2, wherein an average number of the protrusions per one lightweight aggregate is 5 or more and 100 or less.

4. The lightweight aggregate according to any one of claims 1 to 3, wherein the protrusions have an average height of 0.4 mm or more and 2.0 mm or less.

5. The lightweight aggregate according to any one of claims 1 to 4, wherein
a sieve residue as measured using a sieve having an aperture size of 2.5 mm is 95% by mass or more, and
a sieve residue as measured using a sieve having an aperture size of 5.0 mm is less than 15% by mass.

6. The lightweight aggregate according to any one of claims 1 to 5, wherein a sieve residue as measured using a sieve having an aperture size of 5.0 mm is 85% by mass or more.

7. A lightweight aggregate, which is a granular body having a surface on which protrusions having an average diameter of less than 3.0 mm are scattered, comprising
a low-melting-point resin, and non-low-melting-point resin particles and wood particles dispersed in the low-melting-point resin, wherein
the low-melting-point resin has a melting point of 80°C or more and less than 190°C,
the non-low-melting-point resin particles contain at least one selected from a high-melting-point resin having a melting point of 190°C or more and a thermosetting resin, and
the protrusions are formed from the non-low-melting-point resin particles and/or the wood particles.

8. The lightweight aggregate according to claim 7, wherein the low-melting-point resin and the non-low-melting-point resin particles are derived from plastic waste.

9. A method for producing a lightweight aggregate, comprising: extruding a mixture including a low-melting-point resin having a melting point of 80°C or more and less than 190°C, non-low-melting-point resin particles containing at least one selected from a high-melting-point resin having a melting point of 190°C or more and a thermosetting resin and having an average major axis of less than 3.0 mm, and wood particles having an average major axis of less than 3.0 mm to form a formed body;
grinding the formed body to obtain a ground product; and
subjecting the ground product to classification.

10. Mortar comprising cement and the lightweight aggregate according to any one of claims 1 to 8.

11. Concrete comprising cement and the lightweight aggregate according to any one of claims 1 to 8.
